# EUROPEAN PATENT SPECIFICATION

(11) **EP 1 632 132 B1**
(45) Date of publication and mention of the grant of the patent: **02.12.2009**
(21) Application number: 05255443.3
(22) Date of filing: 06.09.2005
(51) Int. Cl.: A01G 3/00, A01G 23/093, B62D 49/06, B62D 55/075, A01G 23/083

(54) **A track driven wood chipper**
Raupenfahrzeug zum Zerspannen von Holz
Hachoir à bois sur chenille

(30) Priority: 06.09.2004 GB 0419739
(43) Date of publication of application: 08.03.2006
(73) Proprietor: TURNER DEVELOPMENT LIMITED, Alcester, Warwickshire B49 5QG (GB)
(72) Inventor: Turner, Anthony, c/o Turner Development Ltd, Alcester Warwickshire B49 5QG (GB)
(74) Representative: Croston, David

(56) References cited:
- EP-A- 1 338 495
- WO-A-92/10390
- US-A- 3 677 572
- US-A- 4 241 803
- US-A- 4 338 985

## Description

The present invention relates to a track driven wood chipper, shredder or combination chipper/shredder.

Track driven chippers and shredders are known and are particularly useful in areas where access by a conventional trailer hitched chipper or shredder would be difficult in view of the lack of the access to road vehicles. Road, rail and river embankments, landscaped parks and forestry areas can present problems of access to conventional trailer hitched chippers and shredders. The track driven chipper/shredder is advantageous in such situations since the cut wood does not have to be transported from the cutting site. This is of particular importance since enabling the device to get close to the material to be processed significantly reduces labour cost. By driving the track driven chipper/shredder to the cutting site, chipping and/or shredding can be performed on site. However, a particular problem experienced in accessing such sites is providing the chipper with sufficient stability and ground clearance to clear obstacles such as tree stubs, rocks and the like.

In one known track driven wood chipper/shredder shown in EP1338495, the track assemblies are arranged at the end of telescopic arms which project from the body of the chipper at approximately 45 degrees to the vertical. By extending the hydraulic arms, the distance between the body and the ground is increased.

International Patent Publication No. WO92/10390 discloses a device in vehicles for pivoting the wheels relative to the chassis in a vertical plane, allowing the ground clearance and wheelbase of the vehicle to be changed.

However, this type of chipper has disadvantages as follows. Firstly, since the arms extend from the base at 45 degrees, the chipper inevitably has a wide wheel base, particularly when the arms are fully extended. The chipper is therefore unable to pass through gates archways and other narrow passageways. Secondly, the track assemblies are mounted to the arms at a position inboard of the tracks. This feature increases the chance of the arm being impeded by a tree stub or similar obstacle, and as a result, limits the ground clearance of the chipper.

It is an object of the present invention to provide an improved wood chipper, shredder or combination chipper/shredder.

According to the invention there is provided a wood chipper, shredder for brushwood or combined wood chipper and shredder for brushwood having a body, a first and a second arm assembly, the first and second arm assemblies being mounted to the body, the first arm assembly being adjustable with respect to the body and comprising a telescopic arm, a first and a second track assembly being provided, the first and second track assemblies being carried by the first and second arm assemblies respectively, **characterised in that** the first arm assembly is adjustable with respect to the body by way of a first actuation means so as to enable the ground clearance of the body and the separation of the track assemblies to be varied independently, the first arm assembly having a first end pivoted on the body and a second end attached to the first track assembly and the body has a notional centreline running fore and aft thereof and the first end of the or each telescopic arm is pivoted on the body at a point on the body on one side of the notional centreline, the track assembly carried by the respective arm being arranged on the opposite side of the notional centreline.

In that way, the device can be provided with sufficient ground clearance to traverse rough ground, and sufficient adjustability of breadth between the tracks to provide stability when the machine is in position or travelling across difficult terrain and reduced width to manoeuvre the device through a gate or similar constriction.

Most preferably, the arm assembly further includes a lever arm arranged between the body and the telescopic arm.

The second arm assembly is preferably adjustable with respect to the body by way of a second actuation means.
Preferably, the second arm assembly comprises a telescopic arm having a first end pivoted on the body and a second end attached to the second track assembly.

Most preferably, the second arm assembly further includes a lever arm arranged between the body and the telescopic arm.

The above features allow each of the track assemblies to be moved in any direction within their plane of operation. Ground clearance can therefore be increased without increasing the width of the vehicle track (the distance between track assemblies).

Equally the width of the vehicle track can be increased and the ground clearance minimised in order to increase stability. Furthermore, the track assemblies can be moved independently of one another in order to stabilise the chipper on an embankment or other uneven ground.

Preferably the arm assembly is mounted to the track assembly at the outboard side of the track assembly.

Advantageously, this allows the ground clearance of the device to be maximised, particularly in the vicinity of the track assemblies.

A chipper in accordance with the invention will now be described in detail by way of example and with reference to the accompanying drawings, in which:
Fig.1 is a side elevation of the chipper in accordance with the invention with details not shown for clarity,
Fig.2 is an end elevation of the chipper in accordance with the invention with both track assemblies fully retracted,
Figs.3 and 5 are similar views to Fig.2 showing the chipper in accordance with the invention with one track assembly fully retracted and one track assembly fully extended, and
Fig.4 is a view similar to Fig.2 showing the chipper in accordance with the invention with the tracks at maximum separation and the body at minimum ground clearance.

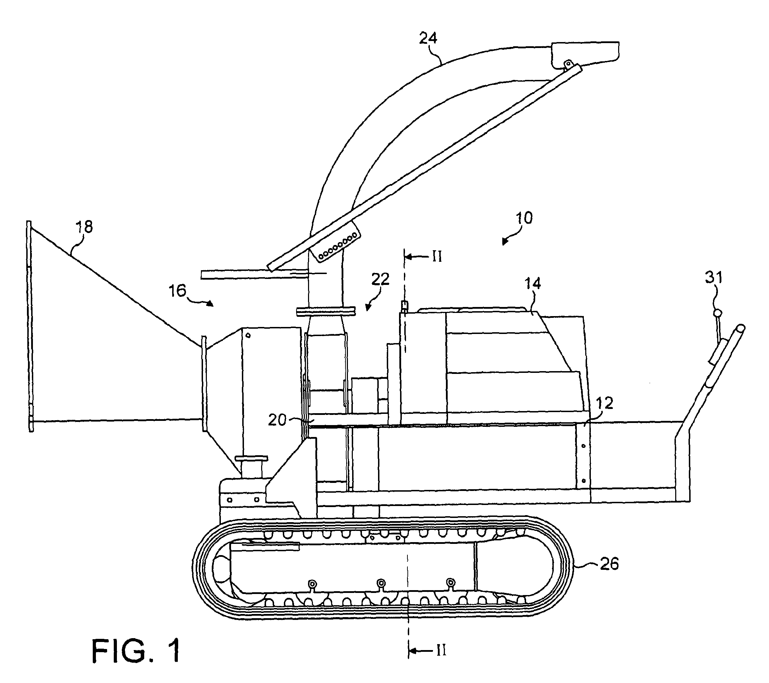

In Fig.1 a track driven chipper is generally indicated at 10.

The chipper 10 comprises a body 12 which carries an internal combustion engine (not shown) which is covered by an engine cover 14. The internal combustion engine drives a hydraulic pump which, in turn, provides drive to chipper infeed rollers (not shown) of a chipper arrangement 16. The chipper arrangement 16 is known and briefly comprises an infeed chute 18 and feed rollers for feeding in logs and other woody material to be chipped, a flywheel (not shown) mounted upon a drive shaft 20 which is arranged to be driven by the aforesaid internal combustion motor, the flywheel having chipping blades mounted thereupon and being arranged to rotate at high speeds in order to effect chipping of wood inserted through the infeed chute 18. An exhaust mechanism 22 comprises means for generating an airflow which forces chipped material up via a chimney 24 out of the machine, the chimney 24 normally being directed onto the ground or into a storage container (not shown).

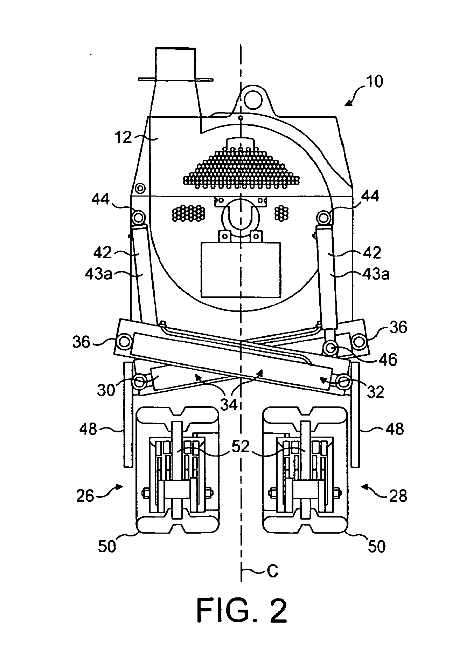

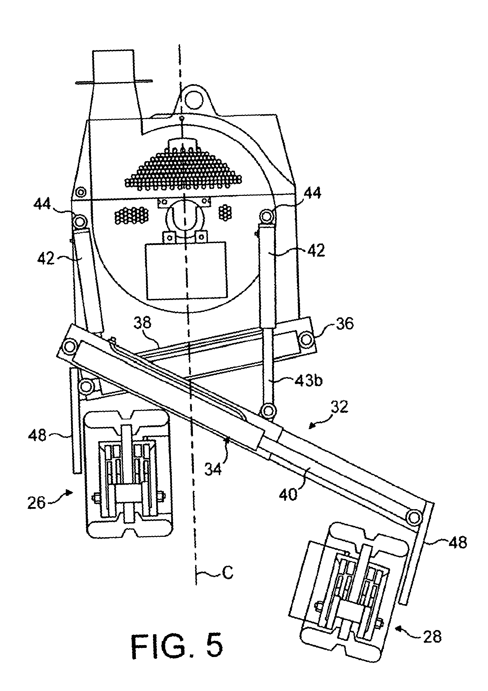

The body 12 has a centreline C (see Fig.2-5).

he chipper 10 is mounted upon two track assemblies 26, 28, track assembly 26 being shown in Fig.1. Each track assembly 26, 28 is driven by means of a hydraulic motor. A valve arrangement is provided to control the hydraulic power supply to the track assemblies 26, 28. In addition, a pair of hydraulic actuator levers is provided, one for each track assembly 26, 28 so that the chipper 10 can be driven and manoeuvred by relevant control of tracks 26, 28. The hydraulic levers are shown at 31.

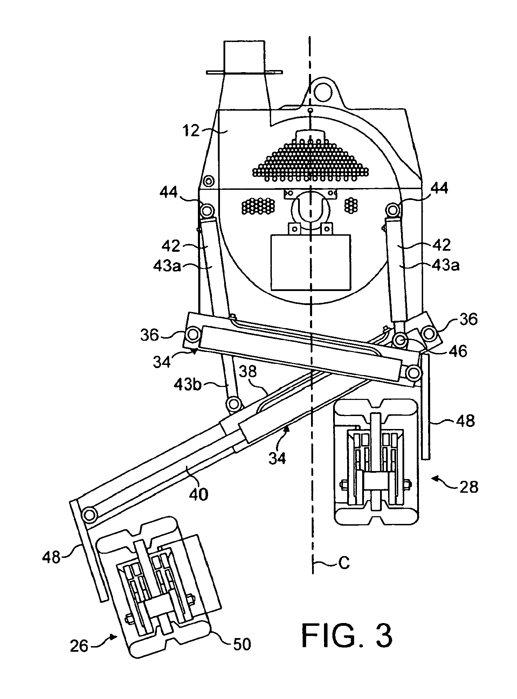

The chipper 10 is mounted upon the track assemblies 26, 28 by arm assemblies 30, 32 respectively. Each arm assembly 30, 32 has a telescopic arm 34 rotatably attached to the body 12 by a pivot 36. The pivot 36 is positioned to one side of the centreline C.
Each telescopic arm 34 comprises a cylinder 38 and a piston 40. The piston 40 is moveable from a retracted position (see arm assembly 32 in Fig.2) to an extended position (see arm assembly 30 in Fig.3) by means of a hydraulic actuator (not shown for clarity) arranged within the body of the arm. The piston 40 is able to extend a distance of, for example, one metre.

The track assembly 26, 28 is positioned, even in the fully retracted position on the opposite side of the centreline C from the pivot 36 of the arm 34 on which it is mounted.

This enables the maximum possible telescopic extension for the minimum possible minimum track width. By arranging the arms in the way shown in Figs. 2 to 5, the shredder can be provided with tracks which have a narrow track width for negotiating narrow access which still enjoy the advantage of substantially increased track width and alterations of the angle of the arms for stability.

Each arm assembly 26, 28 further includes a lever arm 42 in the form of a hydraulic ram 43 having a cylinder 43a, a piston (not shown) and a ram arm 43b. The cylinder 43a of the ram 43 is rotatably attached to the body 12 at a pivot 44, and the ram arm 43b is rotatably attached to the telescopic arm 34 at a pivot 46. The lever arm 42 is actuable between a retracted position (see arm assembly 32 in Fig.2) and an extended position (see arm assembly 30 in Fig.3) so as to move the telescopic arm 34 through an arc of approximately 30 degrees.

The piston 40 of each telescopic arm 34 is fixedly attached to a track assembly mount 48. With reference to Fig.2, each track assembly 26, 28 includes a track 50 which runs on running gear 52. Each running gear 52 is powered by the hydraulic motor to drive the tracks 26, 28 and is rotatably mounted to a track assembly mount 48.

Each track assembly mount 48 is arranged outboard of the track assembly 26, 28. The fact that each mount 48 is outside the track assembly 26, 28 rather than the inside (i.e. outboard rather than inboard) ensures that the mounts 48 do not impinge on the space between the track assemblies thereby increasing ground clearance. The tracks 26, 28 are able therefore to pass objects that would otherwise impede an inboard track assembly mount. A further advantage is that mounting outboard of the tracks 26, 28 enables a longer extension in the telescopic arm to be achieved.

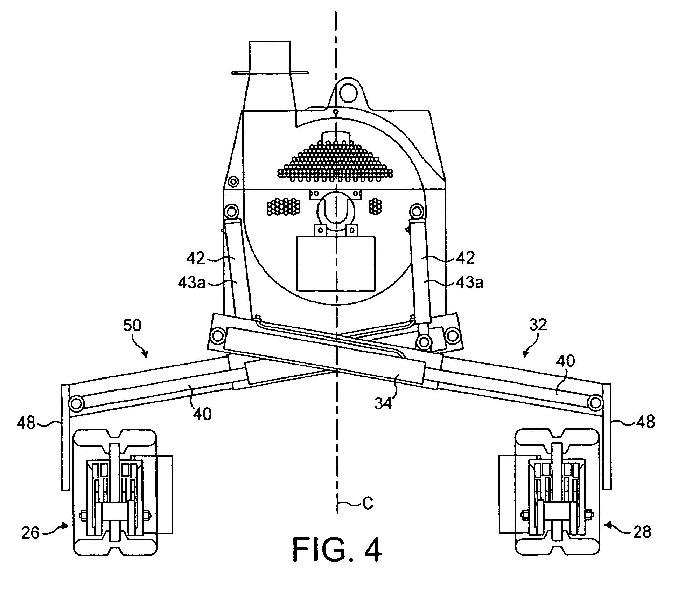

In use, the operator may vary the actuated length of either of the lever arms 42 or telescopic arms 34 so as to match the track width, ground clearance or attitude of the chipper with the under-track conditions. For example, it may be necessary to pass through a thin gap such as a gate. Under these conditions the set up of Figure 1 would be selected. It may be necessary to assume the positions shown in Figs. 2 or 4 in order to counteract the slope of a camber or embankment. Alternatively, there may be a requirement to adopt the position shown in Figure 3 in order to maximise stability for use during unstable ground conditions.

It will be appreciated that the positions that can be adopted by the chipper of the current invention is not limited to those depicted in the figures, and that the user may select a configuration depending on the prevailing conditions.

Although the invention has been described in detail in the context of a chipper 10, it can equally apply to a shredder or a combined chipper and shredder, or scrub clearance mower.

It will also be appreciated that the feature of mounting the track assemblies to the arm assemblies at a position outboard of the track assemblies can be used in combination of any of the arm assembly features described herein.

## Claims

1. A wood chipper, shredder for brushwood or combined wood chipper and shredder for brushwood (10) having a body (12), a first and a second arm assembly (30, 32), the first and second arm assemblies being mounted to the body, the first arm assembly being adjustable with respect to the body and comprising a telescopic arm (34), a first and a second track assembly (26, 28) being provided, the first and second track assemblies being carried by the first and second arm assemblies respectively, **characterised in that** the first arm assembly is adjustable with respect to the body by way of a first actuation means (42) so as to enable the ground clearance of the body and the separation of the track assemblies to be varied independently, the first arm assembly having a first end pivoted on the body and a second end attached to the first track assembly and the body has a notional centreline (C) running fore and aft thereof and the first end of the or each telescopic arm is pivoted on the body at a point on the body on one side of the notional centreline, the track assembly carried by the respective arm being arranged on the opposite side of the notional centreline.

2. A wood chipper, shredder for brushwood or combined wood chipper and shredder for brushwood (10) according to claim 1 in which each track assembly (26, 28) is mounted to a respective arm assembly (30, 32) by means of a track mount (38, 40), the track mount being arranged outboard of the respective track assembly relative to the notional centreline.

3. The wood chipper, shredder for brushwood or combined wood chipper and shredder for brushwood of claim 1 wherein the first actuation means (42) comprises a lever arm (42) arranged to act between the body (12) and the telescopic arm (34) so as to move the telescopic arm relative to the body.

4. The wood chipper, shredder for brushwood or combined wood chipper and shredder for brushwood (10) of any preceding claim wherein the second arm assembly (32) is adjustable with respect to the body (12) by way of a second actuation means (42).

5. The wood chipper, shredder for brushwood or combined wood chipper and shredder for brushwood (10) of claim 4 wherein the second arm assembly (32) comprises a telescopic arm (34) having a first end pivoted on the body and a second end attached to the second track assembly.

6. The wood chipper, shredder for brushwood or combined wood chipper and shredder for brushwood (10) of claim 5 wherein the second arm assembly (32) further includes a lever arm (44) arranged to act between the body (12) and the telescopic arm (34) so as to move the telescopic arm relative to the body.

7. The wood chipper, shredder for brushwood or combined wood chipper and shredder for brushwood (10) of any preceding claim wherein the telescopic arm (34) can move through an arc of 20 to 40 degrees, preferably 30 degrees.

8. The wood chipper, shredder for brushwood or combined wood chipper and shredder for brushwood (10) of any preceding claim wherein the telescopic arm (34) can extend a distance of 0.5 to 1.5 metres, preferably 1 metre.

## Patentansprüche

1. Holzhäcksler, Schredder für Unterholz oder kombinierter Holzhäcksler und Schredder für Unterholz (10), mit einem Körper (12), einer ersten und einer zweiten Armanordnung (30, 32), wobei die ersten und zweiten Armanordnungen an dem Körper befestigt sind, wobei die erste Armanordnung verstellbar ist bezüglich des Körpers und einen teleskopischen Arm (34) umfasst, wobei eine erste und eine zweite Kettenanordnung (26, 28) vorgesehen sind, wobei die erste und zweiten Kettenanordnung jeweils von der ersten und zweiten Armanordnung getragen werden, **dadurch gekennzeichnet, dass** die erste Armanordnung bezüglich des Körpers einstellbar ist mittels einer ersten Betätigungseinrichtung (42), um zu ermöglichen, dass die Bodenfreiheit des Körpers und der Abstand der Kettenanordnungen unabhängig voneinander eingestellt werden kann, wobei die erste Armanordnung ein erstes verschwenkbares Ende an dem Körper hat und ein zweites Ende befestigt an der ersten Kettenanordnung und wobei der Körper eine angenommene Mittellinie (C) hat, die ausgehend davon nach vorne und nach hinten verläuft und wobei das erste verschwenkbare Ende vom dem oder den teleskopischen Armen an dem Körper sich an einem Punkt auf einer Seite der angenommenen Mittellinie (C) befindet, während sich die Kettenanordnung, die von dem jeweiligen Arm getragen wird, auf der gegenüberliegenden Seite der angenommenen Mittellinie (C) befindet.

2. Holzhäcksler, Schredder für Unterholz oder kombinierter Holzhäcksler und Schredder für Unterholz (10) nach Anspruch 1, wobei jede der Kettenanordnungen (26, 28) an einer jeweiligen Armanordnung (30, 32) mittels einer Kettenbefestigung (38, 40) montiert ist, wobei die Kettenbefestigung relativ zu der angenommenen Mittellinie (C) auf der Außenseite der jeweiligen Kettenanordnung angeordnet ist.

3. Holzhäcksler, Schredder für Unterholz oder kombinierter Holzhäcksler und Schredder für Unterholz (10) nach Anspruch 1, wobei die erste Betätigungseinrichtung (42) einen Hebelarm (42) umfasst, der so angeordnet ist, dass er zwischen dem Körper (12) und dem Teleskoparm (34) wirken kann, um den Teleskoparm bezüglich des Körpers zu bewegen.

4. Holzhäcksler, Schredder für Unterholz oder kombinierter Holzhäcksler und Schredder für Unterholz (10) nach einem der vorhergehenden Ansprüche, wobei die zweite Armanordnung (32) verstellbar ist bezüglich des Körpers mittels einer zweiten Betätigungseinrichtung (42).

5. Holzhäcksler, Schredder für Unterholz oder kombinierter Holzhäcksler und Schredder für Unterholz (10) nach Anspruch 4, wobei die zweite Armanordnung (32) einen Teleskoparm (34) umfasst, mit einem ersten verschwenkbaren Ende an dem Körper und einem zweiten Ende, das an der zweiten Kettenanordnung befestigt ist.

6. Holzhäcksler, Schredder für Unterholz oder kombinierter Holzhäcksler und Schredder für Unterholz (10) nach Anspruch 5, wobei die zweite Armanordnung (32) weiterhin einen Hebelarm (44) umfasst, der so angeordnet ist, dass er zwischen dem Körper (12) und dem Teleskoparm (34) wirken kann, um den Teleskoparm bezüglich des Körpers zu bewegen.

7. Holzhäcksler, Schredder für Unterholz oder kombinierter Holzhäcksler und Schredder für Unterholz (10) nach einem der vorhergehenden Ansprüche, wobei sich der Teleskoparm (34) über einen Bogen von 20° bis 40°, vorzugsweise 30° bewegen kann.

8. Holzhäcksler, Schredder für Unterholz oder kombinierter Holzhäcksler und Schredder für Unterholz (10) nach einem der vorhergehenden Ansprüche, wobei sich der Teleskoparm (34) über eine Länge von 0,5m bis 1,5m, vorzugsweise 1m verlängern kann.

## Revendications

1. Hachoir à bois, broyeur de branchages coupés ou combinaison de hachoir à bois ou de broyeur pour branchages coupés (10) comportant un bâti (12), un premier et un second assemblage de bras (30, 32), le premier et le second assemblage de bras étant montés sur le châssis, le premier assemblage de bras étant réglable par rapport au châssis et ayant un bras télescopique (34), un premier et un second train de chenille (26, 28) étant prévus, le premier et le second train de chenille étant portés par le premier et le second assemblage de bras respectifs,
**caractérisé en ce que**
le premier assemblage de bras est réglable par rapport au châssis par l'intermédiaire d'un premier moyen d'actionnement (42) pour permettre de régler indépendamment la garde au sol du châssis et l'écartement des trains de chenille, le premier assemblage de bras ayant une première extrémité montée pivotante sur le châssis et une seconde extrémité fixée au premier train de chenille et le châssis a une ligne médiane géométrique (C), s'étendant vers l'avant et vers l'arrière et la première extrémité du bras télescopique ou de chaque bras télescopique est pivotante sur le châssis en un point du châssis d'un côté de la ligne médiane géométrique, l'assemblage de chenille étant porté par le bras respectif prévu sur le côté opposé de la ligne médiane géométrique.

2. Hachoir à bois, broyeur de branchages coupés ou combinaison de hachoir à bois et de broyeur de branchages coupés (10) selon la revendication 1, dans lequel
chaque train de chenille (26, 28) est monté sur un assemblage de bras respectif (30, 32) par l'intermédiaire d'un moyen de montage de chenille (38, 40), situé à l'extérieur du train de chenille respectif par rapport à la ligne médiane géométrique.

3. Hachoir à bois, broyeur de branchages coupés ou combinaison de hachoir à bois et de broyeur de branchages coupés selon la revendication 1,
**caractérisé en ce que**
le premier moyen d'actionnement (42) comporte un bras de levier (42) pour agir entre le châssis (12) et le bras télescopique (34) et déplacer le bras télescopique par rapport au châssis.

4. Hachoir à bois, broyeur de branchages coupés ou combinaison de hachoir à bois et de broyeur de branchages coupés (10) selon les revendications précédentes,
**caractérisé en ce que**
le second assemblage de bras (32) est réglable par rapport au châssis (12) par l'intermédiaire du second moyen d'actionnement (42).

5. Hachoir à bois, broyeur de branchages coupés ou combinaison de hachoir à bois et de broyeur de branchages coupés (10) selon la revendication 4,
**caractérisé en ce que**
le second assemblage de bras (32) comporte un bras télescopique (34) dont la première extrémité est montée pivotante sur le châssis, et la seconde extrémité est fixée au second train de chenille.

6. Hachoir à bois, broyeur de branchages coupés ou combinaison de hachoir à bois et de broyeur de branchages coupés (10) selon la revendication 5,
**caractérisé en ce que**
le second assemblage de bras (32) comporte en outre un bras de levier (44) pour coopérer entre le châssis (12) et le bras télescopique (34) pour déplacer le bras télescopique par rapport au châssis.

7. Hachoir à bois, broyeur de branchages coupés ou combinaison de hachoir à bois et de broyeur de branchages coupés (10) selon les revendications précédentes,
**caractérisé en ce que**
le bras télescopique (34) peut décrire un arc de 20 à 40 degrés, de préférence 30 degrés.

8. Hachoir à bois, broyeur de branchages coupés ou combinaison de hachoir à bois et de broyeur de branchages coupés (10) selon les revendications précédentes,
**caractérisé en ce que**
le bras télescopique (34) peut s'étendre sur une distance de 0,5 à 1,5 mètres et de préférence 1 mètre.
